# EUROPEAN PATENT APPLICATION

(11) **EP 3 466 896 A1**
(43) Date of publication of application: **10.04.2019**
(21) Application number: 17806058.8
(22) Date of filing: 31.01.2017
(51) Int. Cl.: C02F 3/34, B01J 27/24, B01J 37/36

(54) **PURIFICATION UNIT AND PURIFICATION DEVICE**

(30) Priority: 01.06.2016 JP 2016109901
(71) Applicant: Panasonic Intellectual Property Management Co., Ltd., Osaka-shi, Osaka 540-6207 (JP)
(72) Inventor: SUZUKI, Yuya, Osaka 540-6207 (JP); YOSHIKAWA, Naoki, Osaka 540-6207 (JP); KAMAI, Ryo, Osaka 540-6207 (JP); YAGUCHI, Mitsuo, Osaka 540-6207 (JP)
(74) Representative: Müller-Boré & Partner Patentanwälte PartG mbB
(86) International application number: PCT/JP2017/003376
(87) International publication number: WO 2017/208496

(57) **Abstract**

A purification unit (1, 1A) includes: a first electric conductor (10A); and a second electric conductor (20A) that contacts the first electric conductor. The first electric conductor includes: a junction composed of a contact surface (10b) with the second electric conductor; and an electronic connection section (15) that conducts electrons from the junction to a catalyst (13). The second electric conductor includes: a junction composed of a contact surface (20a) with the first electric conductor; and an electronic connection section (25) that conducts electrons, which moves from microorganisms (21) to the second electric conductor, to the junction. The electronic connection section of the first electric conductor has higher electrical resistivity than the junction of the first electric conductor, and/or the electronic connection section of the second electric conductor has higher electrical resistivity than the junction of the second electric conductor. The first electric conductor contacts a gas phase (40) including oxygen, and the second electric conductor contacts a treatment target.

## Description

### TECHNICAL FIELD

The present invention relates to a purification unit and a purification device. More specifically, the present invention relates to a purification unit for purifying a treatment target such as wastewater and soil, and to a purification device using the purification unit.

### BACKGROUND ART

Heretofore, a variety of water treatment methods have been provided in order to remove organic matter or the like contained in wastewater. Specifically, there have been provided such water treatment methods as an activated sludge process using aerobic respiration of microorganisms and an anaerobic treatment process using anaerobic respiration of microorganisms.

In the activated sludge process, wastewater and sludge (activated sludge) containing microorganisms are mixed with each other in a biological reaction tank, and air required for the microorganisms to oxidatively degrade organic matter in the wastewater is sent into the biological reaction tank, and an obtained mixture is stirred. In this way, the wastewater is purified. However, the activated sludge process requires enormous electrical power for aeration in the biological reaction tank. Moreover, as a result of oxygen respiration and active metabolism of the microorganisms, a large amount of sludge (microbial carcasses) that is an industrial waste is generated.

In contrast, the aeration is not required in the anaerobic treatment process, and accordingly, a required amount of electrical power can be greatly reduced in comparison with the activated sludge process. Moreover, since free energy acquired by the microorganisms is small, an amount of the generated sludge is reduced. As a wastewater treatment device using such an anaerobic treatment process as described above, disclosed is a device in which anaerobic microorganisms are attached to a carrier using particles of a hydrogen storage alloy (for example, refer to Patent Literature 1).

### CITATION LIST

### PATENT LITERATURE

Patent Literature 1: Japanese Unexamined Patent Application Publication No. HI-47494

### SUMMARY OF INVENTION

However, the conventional anaerobic treatment process has had a problem that biogas containing a large amount of flammable methane gas having a characteristic odor is generated as a product of the anaerobic respiration.

The present invention has been made in consideration of such a problem as described above, which is inherent in the prior art. It is an object of the present invention to provide a purification unit capable of reducing the amount of generated sludge and inhibiting the generation of the biogas and to provide a purification device using the purification unit.

In order to solve the above-described problem, a purification unit according to a first aspect of the present invention includes: a first electric conductor including a catalyst; and a second electric conductor brought into contact with and electrically connected to the first electric conductor. The first electric conductor includes: a junction composed of a contact surface with the second electric conductor; and an electronic connection section that conducts electrons from the junction to the catalyst. The second electric conductor includes: a junction composed of a contact surface with the first electric conductor; and an electronic connection section that conducts electrons to the junction, the electrons moving from microorganisms to the second electric conductor. Then, the electronic connection section of the first electric conductor has higher electrical resistivity than the junction of the first electric conductor, and/or the electronic connection section of the second electric conductor has higher electrical resistivity than the junction of the second electric conductor. At least a part of the first electric conductor contacts a gas phase including oxygen, and at least a part of the second electric conductor contacts a treatment target.

A purification device according to a second aspect of the present invention includes: the above-mentioned purification unit; and a treatment tank for holding therein the purification unit and wastewater to be purified by the purification unit. Then, the purification unit is installed so that at least a part of the first electric conductor contacts the gas phase, and that at least a part of the second electric conductor contacts the wastewater.

A purification device according to a third aspect of the present invention includes the above-mentioned purification unit. Then, the purification unit is installed so that at least a part of the first electric conductor contacts the gas phase, and that at least a part of the second electric conductor contacts soil to be purified by the purification unit.

### BRIEF DESCRIPTION OF DRAWINGS

[Fig. 1] Fig. 1 is a perspective view showing an example of a purification device according to a first embodiment of the present invention.
[Fig. 2] Fig. 2 is a cross-sectional view taken along a line A-A in Fig. 1.
[Fig. 3] Fig. 3 is an exploded perspective view showing a purification unit in the above purification device.
[Fig. 4] Fig. 4 is a cross-sectional view for explaining an electronic connection section and a junction in the purification unit.
[Fig. 5] Fig. 5 is cross-sectional views showing an example of a configuration for causing the electronic connection section to have higher electrical resistivity than the junction in the purification unit.
[Fig. 6] Fig. 6 is cross-sectional views showing another example of the configuration for causing the electronic connection section to have higher electrical resistivity than the junction in the purification unit.
[Fig. 7] Fig. 7 is cross-sectional views showing examples of a purification unit according to a second embodiment of the present invention.
[Fig. 8] Fig. 8 is cross-sectional views showing examples of a purification unit according to a third embodiment of the present invention.
[Fig. 9] Fig. 9 is cross-sectional views showing examples of a purification unit according to a fourth embodiment of the present invention.
[Fig. 10] Fig. 10 is a cross-sectional view showing an example of a purification unit according to a fifth embodiment of the present invention.

### DESCRIPTION OF EMBODIMENTS

Hereinafter, a detailed description will be given of a purification unit and a purification device according to this embodiment. Note that dimensional ratios in the drawings are exaggerated for convenience of explanation, and are sometimes different from actual ratios.

### [First embodiment]

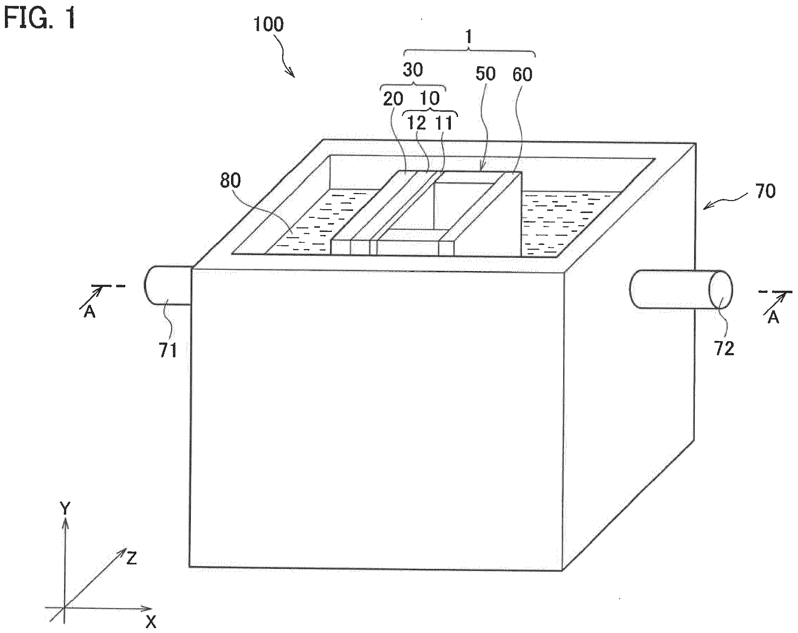

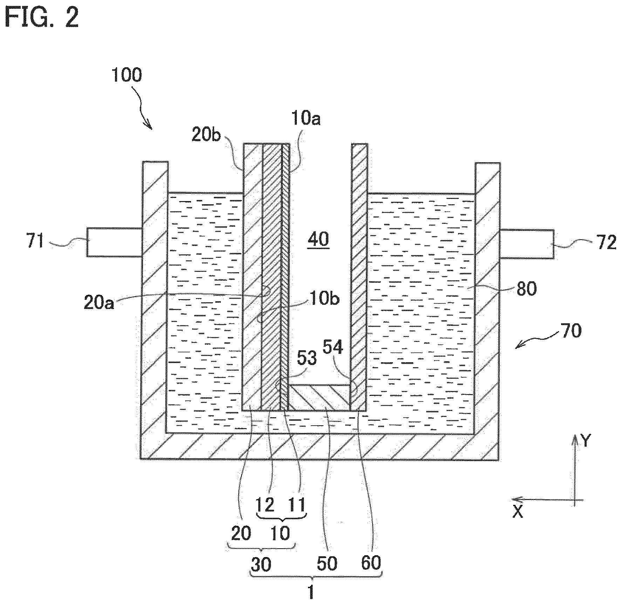

A purification device 100 according to this embodiment includes a purification unit 1 as shown in Fig. 1 and Fig. 2. The purification unit 1 includes a purification structure 30 composed of a positive electrode 10 that is a first electric conductor and a negative electrode 20 that is a second electric conductor. In the purification unit 1, a contact surface 10b of the positive electrode 10 and a contact surface 20a of the negative electrode 20, which face each other, are brought into contact with and electrically connected to each other. Then, a gas diffusion layer 12 of the positive electrode 10 is brought into contact with the contact surface 20a of the negative electrode 20, and a water-repellent layer 11 of the positive electrode 10 is exposed to a gas phase 40.

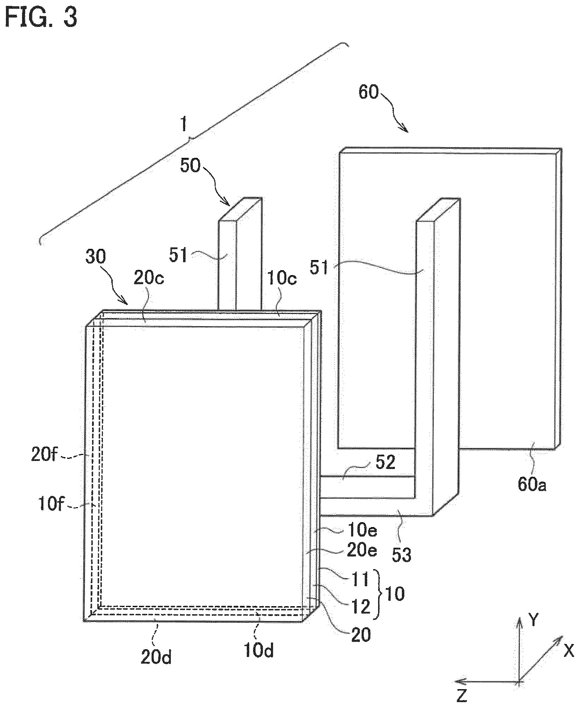

As shown in Fig. 3, the purification structure 30 is laminated on a cassette substrate 50. The cassette substrate 50 is a U-shaped frame member that goes along an outer peripheral portion of the surface 10a in the positive electrodes 10. An upper portion of the cassette substrate 50 is open. That is, the cassette substrate 50 is a frame member in which bottom surfaces of two first columnar members 51 are coupled to each other by a second columnar member 52. Then, as shown in Fig. 2, a side surface 53 of the cassette substrate 50 is joined to the outer peripheral portion of the surface 10a of the positive electrode 10, and a side surface 54 opposite with the side surface 53 is joined to an outer peripheral portion of a surface 60a of a plate member 60.

As shown in Fig. 2, the purification unit 1 composed by laminating the purification structure 30, the cassette substrate 50 and the plate member 60 on one another is disposed inside a treatment tank 70 so that the gas phase 40 is formed. Wastewater 80 that is a treatment target is held inside the treatment tank 70, and the positive electrode 10 and the negative electrode 20 are immersed in the wastewater 80.

As described later, the positive electrode 10 includes a water-repellent layer 11 having water repellency, and the plate member 60 is composed of a flat plate material that does not allow permeation of the wastewater 80. Therefore, the wastewater 80 held inside the treatment tank 70 and the inside of the cassette substrate 50 are separated from each other, and the gas phase 40 is formed in an inner space formed of the purification structure 30, the cassette substrate 50 and the plate member 60. Then, the purification device 100 is configured so that this gas phase 40 is open to the outside air, or so that air is supplied from the outside to this gas phase 40, for example, by a pump.

### (First electric conductor (Positive electrode))

As shown in Fig. 1 and Fig. 2, the positive electrode 10 that is the first electric conductor according to this embodiment is composed of a gas diffusion electrode including the water-repellent layer 11 and the gas diffusion layer 12 stacked on the water-repellent layer 11 to contact the same. Such a thin plate-shaped gas diffusion electrode as described above is used, whereby it becomes possible to easily supply a catalyst in the positive electrode 10 with oxygen in the gas phase 40.

The water-repellent layer 11 in the positive electrode 10 is a layer having both water repellency and oxygen permeability. The water-repellent layer 11 is configured so as, while satisfactorily separating the gas phase 40 and a liquid phase in an electrochemical system in the purification unit 1 from each other, to allow movement of oxygen, which shifts from the gas phase 40 to the liquid phase. That is, the water-repellent layer 11 can suppress the wastewater 80 from moving to the gas phase 40 while allowing the permeation of the oxygen in the gas phase 40 and moving the oxygen to the gas diffusion layer 12. Note that such "separation" as used herein refers to physical blocking.

The water-repellent layer 11 is in contact with the gas phase 40 having gas including oxygen, and diffuses the oxygen in the gas phase 40. Then, in the configuration shown in Fig. 2, the water-repellent layer 11 supplies oxygen to the gas diffusion layer 12 substantially uniformly. Therefore, it is preferable that the water-repellent layer 11 be a porous body so that the oxygen can be diffused. Note that, since the water-repellent layer 11 has water repellency, a decrease of oxygen diffusibility can be prevented, which may result from the fact that pores of the porous body are closed due to dew condensation and the like. Moreover, since the wastewater 80 is difficult to soak in an inside of the water-repellent layer 11, it becomes possible to efficiently flow oxygen from the surface of the water-repellent layer 11, which contacts the gas phase 40, to the surface facing the gas diffusion layer 12.

It is preferable that the water-repellent layer 11 be formed of a woven fabric or a nonwoven fabric into a sheet shape. Moreover, a material that composes the water-repellent layer 11 is not particularly limited as long as having water repellency and being capable of diffusing the oxygen in the gas phase 40. As the material that composes the water-repellent layer 11, for example, there can be used at least one selected from the group consisting of polyethylene, polypropylene, polybutadiene, nylon, polytetrafluoroethylene (PTFE), ethylcellulose, poly-4-methylpentene-1, butyl rubber, and polydimethylsiloxane (PDMS). Each of these materials can easily form the porous body, and further, also has high water repellency, and accordingly, can enhance the gas diffusibility by preventing the pores from being closed. Note that, preferably, the water-repellent layer 11 has a plurality of through holes in a lamination direction X of the water-repellent layer 11 and the gas diffusion layer 12.

In order to enhance the water repellency, the water-repellent layer 11 may be subjected to water-repellent treatment using a water-repellent agent as necessary. Specifically, a water-repellent agent such as polytetrafluoroethylene may be adhered to the porous body that composes the water-repellent layer 11, and may enhance the water repellency thereof.

It is preferable that the gas diffusion layer 12 in the positive electrode 10 include a porous electroconductive material and a catalyst supported on this electroconductive material. Such providing of such a gas diffusion layer 12 as described above in the positive electrode 10 makes it possible to conduct electrons, which are generated by a local cell reaction to be described later, between the negative electrode 20 and the catalyst. That is, as described later, the catalyst is supported on the gas diffusion layer 12, and further, the catalyst is preferably an oxygen reduction catalyst. Then, the electrons move from the negative electrode 20 through the gas diffusion layer 12 to the catalyst, whereby the catalyst makes it possible to advance an oxygen reduction reaction by oxygen, hydrogen ions and electrons.

In order to ensure stable performance, in the positive electrode 10, it is preferable that oxygen efficiently permeate the water-repellent layer 11 and the gas diffusion layer 12 and be supplied to the catalyst. Therefore, it is preferable that the gas diffusion layer 12 be a porous body that has a large number of oxygen-permeable pores from the surface facing the water-repellent layer 11 to the surface opposite therewith. Moreover, it is particularly preferable that a shape of the gas diffusion layer 12 be three-dimensionally mesh-like. Such a three-dimensional mesh shape makes it possible to impart high oxygen permeability and electro-conductivity to the gas diffusion layer 12.

In order to efficiently supply oxygen to the gas diffusion layer 12 in the positive electrode 10, it is preferable that the water-repellent layer 11 be joined to the gas diffusion layer 12 via an adhesive. In this way, the diffused oxygen is directly supplied to the gas diffusion layer 12, and the oxygen reduction reaction can be carried out efficiently. From a viewpoint of ensuring adhesive properties between the water-repellent layer 11 and the gas diffusion layer 12, it is preferable that the adhesive be provided on at least a part between the water-repellent layer 11 and the gas diffusion layer 12. However, from a viewpoint of increasing the adhesive properties between the water-repellent layer 11 and the gas diffusion layer 12 and supplying oxygen to the gas diffusion layer 12 stably for a long period, it is more preferable that the adhesive be provided over the entire surface between the water-repellent layer 11 and the gas diffusion layer 12.

As the adhesive, an adhesive having oxygen permeability is preferable, and a resin can be used, which includes at least one selected from the group consisting of polymethyl methacrylate, methacrylic acid-styrene copolymer, styrene-butadiene rubber, butyl rubber, nitrile rubber, chloroprene rubber and silicone.

Here, a more detailed description will be given of the gas diffusion layer 12 of the positive electrode 10 in this embodiment. As mentioned above, the gas diffusion layer 12 can be configured to include a porous electroconductive material and a catalyst supported on the electroconductive material.

The electroconductive material in the gas diffusion layer 12 can be composed of at least one material selected from the group consisting of graphite foil, carbon paper, carbon cloth and stainless steel (SUS). More specifically, the electroconductive material in the gas diffusion layer 12 can be composed, for example, of at least one material selected from the group consisting of a carbon-based substance, an electrically conductive polymer, a semiconductor and metal. The carbon-based substance refers to a substance containing carbon as a constituent. Examples of the carbon-based substance include, for example: carbon powder such as graphite, activated carbon, carbon black, Vulcan (registered trademark) XC-72R, acetylene black, furnace black, and Denka Black; carbon fiber such as graphite felt, carbon wool and carbon woven fabric; carbon plate; carbon paper; carbon disc; carbon cloth; carbon foil; and carbon-based material molded by compressing carbon particles. Moreover, the examples of the carbon-based substance also include microstructured substances such as carbon nanotubes, carbon nanohorns and carbon nanoclusters.

The electrically conductive polymer is a generic name of high molecular compounds having electro-conductivity. Examples of the electrically conductive polymer include: polymers of single monomers or two or more monomers, which are composed of, as elements, aniline, amino phenol, diaminophenol, pyrrole, thiophene, paraphenylene, fluorene, furan, acetylene, or derivatives thereof. Specific examples of the electrically conductive polymer include polyaniline, polyaminophenol, polydiaminophenol, polypyrrole, polythiophene, polyparaphenylene, polyfluorene, polyfuran, polyacetylene and the like. The metal electroconductive material includes metal materials having mesh, foam and other shapes, and for example, a stainless steel mesh can be used. Note that, considering availability, cost, corrosion resistance, durability and the like, it is preferable that the electroconductive material be the carbon-based substance.

Moreover, it is preferable that a shape of the electroconductive material be a powdery shape or a fibrous shape. Furthermore, the electroconductive material may be supported on a support. The support means a member that itself has rigidity and can impart a constant shape to the gas diffusion electrode. The support may be an insulator or an electric conductor. When the support is an insulator, examples of the support include glass pieces, plastics, synthetic rubbers, ceramics, paper subjected to waterproof or water-repellent treatment, plant pieces such as wood pieces, animal pieces such as bone pieces and shells, and the like. Examples of a support having a porous structure include porous ceramics, porous plastics, sponge and the like. When the support is an electric conductor, examples of the support include carbon-based substances such as carbon paper, carbon fiber and carbon rod, metals, electrically conductive polymers, and the like. When the support is an electric conductor, such an electroconductive material that supports the carbon-based material is disposed on a surface of the support, whereby the support can also function as a current collector.

As the catalyst in the gas diffusion layer 12, there can be used a platinum-based catalyst, a carbon-based catalyst using iron or cobalt, a transition metal oxide-based catalyst including partially oxidized tantalum carbon nitride (TaCNO) and zirconium carbon nitride (ZrCNO), a carbide-based catalyst using tungsten or molybdenum, activated carbon, and the like.

Here, it is preferable that the catalyst in the gas diffusion layer 12 be a carbon-based material doped with metal atoms. The metal atoms are not particularly limited; however, it is preferable that the metal atoms be atoms of at least one metal selected from the group consisting of titanium, vanadium, chromium, manganese, iron, cobalt, nickel, copper, zirconium, niobium, molybdenum, ruthenium, rhodium, palladium, silver, hafnium, tantalum, tungsten, rhenium, osmium, iridium, platinum and gold. In this case, the carbon-based material exerts excellent performance particularly as a catalyst for promoting the oxygen reduction reaction. An amount of the metal atoms contained in the carbon-based material may be appropriately set so that the carbon-based material has excellent catalytic performance.

It is preferable that the carbon-based material be further doped with atoms of at least one nonmetal selected from nitrogen, boron, sulfur and phosphorus. An amount of such nonmetal atoms doped into the carbon-based material may also be appropriately set so that the carbon-based material has such excellent catalytic performance.

The carbon-based material is obtained, for example, in such a manner that a carbon-source raw material such as graphite and amorphous carbon is used as a base, and that this carbon-source raw material is doped with the metal atoms and the atoms of the at least one nonmetal selected from nitrogen, boron, sulfur and phosphorus.

Combinations of the metal atoms and the nomnetal atoms, which are doped into the carbon-based material, are appropriately selected. In particular, it is preferable that the nonmetal atoms include nitrogen, and that the metal atoms include iron. In this case, the carbon-based material can have particularly excellent catalytic activity. Note that the nonmetal atoms may be only nitrogen and the metal atoms may be only iron.

The nonmetal atoms may include nitrogen, and the metal atoms may include at least either one of cobalt and manganese. In this case also, the carbon-based material can have particularly excellent catalytic activity. Note that the nonmetal atoms may be only nitrogen. Moreover, the metal atoms may be only cobalt, only manganese, or only cobalt and manganese.

The shape of the carbon-based material is not particularly limited. For example, the carbon-based material may have a particulate shape or a sheet-like shape. Dimensions of the carbon-based material having the sheet-like shape are not particularly limited; however, for example, the carbon-based material may have minute dimensions. The carbon-based material having the sheet-like shape may be porous. It is preferable that the porous carbon-based material having the sheet-like shape have, for example, a woven fabric shape, a nonwoven fabric shape, and the like.

The carbon-based material composed as the catalyst in the gas diffusion layer 12 can be prepared as follows. First, a mixture is prepared, which contains a nonmetal compound including at least one nonmetal selected from the group consisting of nitrogen, boron, sulfur and phosphorus, a metal compound, and the carbon-source raw material. Then, this mixture is heated at a temperature of 800 °C or more to 1000 °C or less for 45 seconds or more and less than 600 seconds. In this way, the carbon-based material composed as the catalyst can be obtained.

Here, as mentioned above, for example, graphite or amorphous carbon can be used as the carbon-source raw material. Moreover, the metal compound is not particularly limited as long as the metal compound is a compound including metal atoms capable of coordinate bond with the nonmetal atoms to be doped into the carbon-source raw material. As the metal compound, for example, there can be used at least one selected from the group consisting of: inorganic metal salt such as metal chloride, nitrate, sulfate, bromide, iodide and fluoride; organic metal salt such as metal acetate; a hydrate of the inorganic metal salt; and a hydrate of the organic metal salt. For example, when the graphite is doped with iron, it is preferable that the metal compound contain iron chloride (III). When the graphite is doped with cobalt, it is preferable that the metal compound contain cobalt chloride. Moreover, when the carbon-source raw material is doped with manganese, it is preferable that the metal compound contain manganese acetate. It is preferable that an amount of use of the metal compound be determined so that a ratio of the metal atoms in the metal compound to the carbon-source raw material can stay within a range of 5 to 30 % by mass, and it is more preferable that the amount of use of the metal compound be determined so that this ratio can stay within a range of 5 to 20 % by mass.

As described above, it is preferable that the nonmetal compound be a compound of at least one nonmetal selected from the group consisting of nitrogen, boron, sulfur and phosphorus. As the nonmetal compound, for example, there can be used at least one compound selected from the group consisting of pentaethylenehexamine, ethylenediamine, tetraethylenepentamine, triethylenetetramine, ethylenediamine, octylboronic acid, 1,2-bis(diethylphosphinoethane), triphenyl phosphite, and benzyl disulfide. An amount of use of the nonmetal compound is appropriately set according to a doping amount of the nonmetal atoms into the carbon-source raw material. It is preferable that the amount of use of the nonmetal compound be determined so that a molar ratio of the metal atoms in the metal compound and the nonmetal atoms in the nonmetal compound can stay within a range of 1: 1 to 1: 2, and it is more preferable that the amount of use of the nonmetal compound be determined so that this molar ratio can stay within a range of 1: 1.5 to 1: 1.8.

The mixture containing the nonmetal compound, the metal compound and the carbon-source raw material in the case of preparing the carbon-based material composed as the catalyst can be obtained, for example, as follows. First, the carbon-source raw material, the metal compound, and the nonmetal compound are mixed with one another, and as necessary, a solvent such as ethanol is added to an obtained mixture, and a total amount of the mixture is adjusted. These are further dispersed by an ultrasonic dispersion method. Subsequently, after these are heated at an appropriate temperature (for example, 60 °C), the mixture is dried to remove the solvent. In this way, such a mixture containing the nonmetal compound, the metal compound and the carbon-source raw material is obtained.

Next, the obtained mixture is heated, for example, in a reducing atmosphere or an inert gas atmosphere. In this way, the nonmetal atoms are doped into the carbon-source raw material, and the metal atoms are also doped thereinto by the coordinate bond between the nonmetal atoms and the metal atoms. It is preferable that a heating temperature be within a range of 800 °C or more to 1000 °C or less, and it is preferable that a heating time be within a range of 45 seconds or more to less than 600 seconds. Since the heating time is short, the carbon-based material is efficiently produced, and the catalytic activity of the carbon-based material is further increased. Note that, preferably, a heating rate of the mixture at the start of heating in the heating treatment is 50 °C/s or more. Such rapid heating further enhances the catalytic activity of the carbon-based material.

Moreover, the carbon-based material may be further acid-washed. For example, the carbon-based material may be dispersed in pure water for 30 minutes by a homogenizer, and thereafter, the carbon-based material may be placed in 2M sulfuric acid and stirred at 80 °C for 3 hours. In this case, elution of the metal component from the carbon-based material is reduced.

By such a production method, a carbon-based material is obtained, in which contents of such an inactive metal compound and a metal crystal are significantly low, and electro-conductivity is high.

In the gas diffusion layer 12, the catalyst may be bound to the electroconductive material using a binding agent. That is, the catalyst may be supported on surfaces and pore insides of the electroconductive material using the binding agent. In this way, the oxygen reduction properties of the catalyst can be prevented from being degraded due to desorption of the catalyst from the electroconductive material. As the binding agent, for example, it is preferable to use at least one selected from the group consisting of polytetrafluoroethylene, polyvinylidene fluoride (PVDF), and ethylene-propylene-diene copolymer (EPDM). Moreover, it is also preferable to use Nafion (registered trademark) as the binding agent.

### (Second electric conductor (Negative electrode))

The negative electrode 20 that is the second electric conductor according to this embodiment has functions to support microorganisms to be described later, and further, to generate hydrogen ions and electrons from at least either of the organic matter and a nitrogen-containing compound in the wastewater 80 by a catalytic action of the microorganisms. Therefore, the negative electrode 20 of this embodiment is not particularly limited as long as the negative electrode 20 has a configuration of generating such functions.

The negative electrode 20 in this embodiment has a structure in which microorganisms are supported on an electrically conductive sheet having electro-conductivity. As the electrically conductive sheet, there can be used at least one selected from the group consisting of a porous electrically conductive sheet, a woven fabric electrically conductive sheet, and a nonwoven fabric electrically conductive sheet. Moreover, the electrically conductive sheet may be a laminated body formed by laminating a plurality of sheets on one another. Such a sheet having a plurality of pores is used as the electrically conductive sheet of the negative electrode 20, whereby it becomes easy for hydrogen ions generated by a local cell reaction to be described later to move in a direction of the positive electrode 10, thus making it possible to increase the rate of the oxygen reduction reaction. Moreover, from the viewpoint of enhancing the ion permeability, it is preferable that the electrically conductive sheet of the negative electrode 20 have a space (air gap) continuous in the lamination direction X, that is, in a thickness direction of the electrically conductive sheet.

For the electrically conductive sheet in the negative electrode 20, at least one selected from the group consisting of graphite foil, graphite brush and carbon felt can be used. Note that the graphite brush is a product in which a bundle of carbon fibers is attached with a handle, and the graphite brush has electro-conductivity as a whole.

Moreover, the electrically conductive sheet in the negative electrode 20 may be a metal plate having a plurality of through holes in the thickness direction. Therefore, as a material that composes the electrically conductive sheet of the negative electrode 20, for example, electrically conductive metal such as aluminum, copper, stainless steel, nickel and titanium can also be used.

The microorganisms supported on the negative electrode 20 are not particularly limited as long as being microorganisms which degrade organic matter or a compound containing nitrogen in the wastewater 80; however, it is preferable to use anaerobic microorganisms which do not require oxygen for growth thereof. The anaerobic microorganisms do not require air for oxidatively degrading the organic matter in the wastewater 80. Therefore, electric power required to send air can be reduced to a large extent. Moreover, since free energy acquired by the microorganisms is small, it becomes possible to reduce an amount of generated sludge.

Preferably, the microorganisms held in the negative electrode 20 are anaerobic microorganisms, and for example, preferably are electricity-producing bacteria having an extracellular electron transfer mechanism. Specific examples of the anaerobic microorganisms include Geobacter bacteria, Shewanella bacteria, Aeromonas bacteria, Geothrix bacteria, and Saccharomyces bacteria.

The negative electrode 20 may hold the anaerobic microorganisms in such a manner that a biofilm including the anaerobic microorganisms is laminated and fixed to the negative electrode 20 itself. For example, the anaerobic microorganisms may be held on a surface 20b opposite with the contact surface 20a in the negative electrode 20. Note that the term "biofilm" generally refers to a three-dimensional structure including a microbial population and an extracellular polymeric substance (EPS) produced by the microbial population. However, the anaerobic microorganisms may be held on the negative electrode 20 without using the biofilm. Moreover, the anaerobic microorganisms may be held not only on the surface of the negative electrode 20 but also in the inside thereof.

As mentioned above, it is preferable that the anaerobic microorganisms be supported on at least either one of the surface and inside of the negative electrode 20. However, the fact that these microorganisms are contained in the wastewater 80 is sufficient to exert the effects of this embodiment. Therefore, in the purification device 100, it is preferable that at least either one of the negative electrode 20 and the wastewater 80 hold the anaerobic microorganisms.

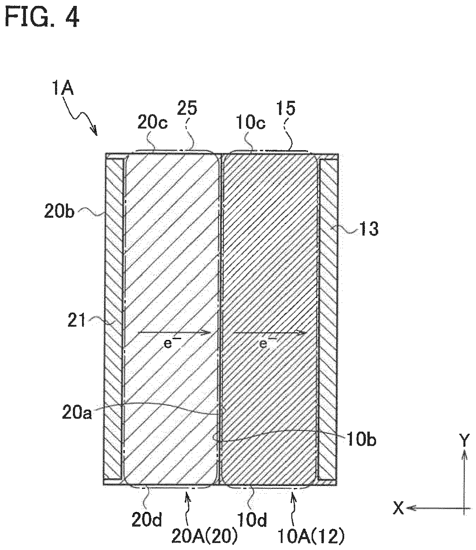

Here, in the purification unit of this embodiment, the first electric conductor includes: a junction composed of a contact surface with the second electric conductor; and an electronic connection section that conducts electrons from the junction to the catalyst. Moreover, the second electric conductor includes: a junction composed of a contact surface with the first electric conductor; and an electronic connection section that conducts electrons to the junction, the electrons having moved from the microorganisms to the second electric conductor. That is, as shown in Fig. 4, in a purification unit 1A, the gas diffusion layer 12 of the positive electrode 10 as a first electric conductor 10A includes: a junction composed of the contact surface 10b with the negative electrode 20 as a second electric conductor 20A; and an electronic connection section 15 that conducts electrons from the junction to a catalyst 13. Moreover, the negative electrode 20 as the second electric conductor 20A includes: a junction composed of the contact surface 20a with the gas diffusion layer 12 that is the first electric conductor 10A; and an electronic connection section 25 that conducts electrons to the junction, the electrons having moved from the microorganisms 21 to the second electric conductor 20A. Note that, in Fig. 4, the water-repellent layer is omitted in the positive electrode as the first electric conductor 10A.

Then, the electronic connection section 15 of the first electric conductor 10A has higher electrical resistivity than the junction (contact surface 10b) of the first electric conductor 10A. Alternatively, the electronic connection section 25 of the second electric conductor 20A has higher electrical resistivity than the junction (contact surface 20a) of the second electric conductor 20A. Alternatively, the electronic connection section 15 of the first electric conductor 10A has higher electrical resistivity than the junction (contact surface 10b) of the first electric conductor 10A, and the electronic connection section 25 of the second electric conductor 20A has higher electrical resistivity than the junction (contact surface 20a) of the second electric conductor 20A.

While the first electric conductor 10A and the second electric conductor 20A have electro-conductivity, the electronic connection section 15 has higher electrical resistivity than the junction (contact surface 10b), and/or the electronic connection section 25 has higher electrical resistivity than the junction (contact surface 20a), whereby a potential difference is generated. That is, the electrical resistivity of the electronic connection section 15 and/or the electronic connection section 25 becomes relatively high, whereby a support region for the catalyst 13 in the first electric conductor 10A and a support region for the microorganisms 21 in the second electric conductor 20A can be controlled to appropriate potentials. As a result, it becomes possible to ensure a potential difference between the support region for the catalyst 13 and the support region for the microorganisms 21. Moreover, metabolism of the microorganisms, which follows electronic conduction, is promoted, and accordingly, it becomes possible to increase degradation efficiency of the organic matter and the nitrogen-containing compound in the treatment target. Moreover, in the purification unit 1, wires and a booster system in an external circuit do not need to be provided for ensuring the potential difference. Accordingly, the purification unit 1 can adopt a simpler configuration, and the purification device 100 can be downsized.

Note that the electrical resistivity of the junction of the first electric conductor 10A is the electrical resistivity of the contact surface 10b of the first electric conductor 10A. Moreover, the electrical resistivity of the junction of the second electric conductor 20A is the electrical resistivity of the contact surface 20a of the second electric conductor 20A. The electrical resistivity of each of the junctions can be measured by the four-point probe method.

The electrical resistivity of the electronic connection section 15 of the first electric conductor 10A is electrical resistivity of a portion included in the electronic connection section 15 and located on a plane perpendicular to the junction (contact surface 10b) of the first electric conductor 10A. That is, in this embodiment, the electrical resistivity of the electronic connection section 15 of the first electric conductor 10A is the lowest value among values measured at portions included in the electronic connection section 15 and located in an upper surface 10c and a lower surface 10d shown in Fig. 4 and a right side surface 10e and a left side surface 10f shown in Fig. 3. Moreover, the electrical resistivity of the electronic connection section 15 is a value measured by the four-point probe method along a lamination direction (X-axis direction) of the first electric conductor 10A and the second electric conductor 20A.

The electrical resistivity of the electronic connection section 25 of the second electric conductor 20A is electrical resistivity of a portion included in the electronic connection section 25 and located on a plane perpendicular to the junction (contact surface 20a) of the second electric conductor 20A. That is, in this embodiment, the electrical resistivity of the electronic connection section 25 of the second electric conductor 20A is the lowest value among values measured at portions included in the electronic connection section 25 and located in an upper surface 20c and a lower surface 20d shown in Fig. 4 and a right side surface 20e and a left side surface 20f shown in Fig. 3. Moreover, the electrical resistivity of the electronic connection section 25 is a value measured by the four-point probe method along a lamination direction of the second electric conductor 20A and the second electric conductor 20A (X-axis direction).

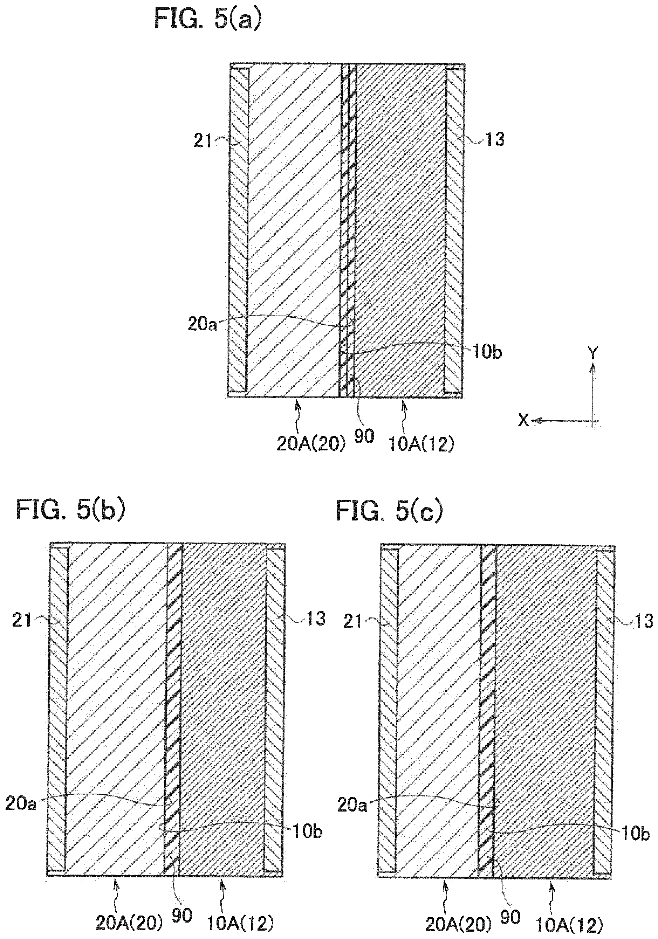

It is preferable to adopt a configuration shown in Fig. 5 in order that the electronic connection section 15 of the first electric conductor 10A may have higher electrical resistivity than the junction of the first electric conductor 10A, and that the electronic connection section 25 of the second electric conductor 20A may have higher electrical resistivity than the junction of the second electric conductor 20A. Specifically, it is preferable to provide a resistive layer 90 having high electrical resistivity between the junction (contact surface 10b) of the first electric conductor 10A and the junction (contact surface 20a) of the second electric conductor 20A. Then, it is preferable that the electrical resistivity of the resistive layer 90 be higher than those of the electronic connection section 15 of the first electric conductor 10A and the electronic connection section 25 of the second electric conductor 20A. The resistive layer 90 is provided on an interface between the first electric conductor 10A and the second electric conductor 20A, whereby it becomes possible to increase electrical resistance in the lamination direction of the first electric conductor 10A and the second electric conductor 20A, and to increase the electrical resistivity of each of the electronic connection sections more than those of the junctions. A material of such a resistive layer 90 is not particularly limited as long as the material increases the electrical resistance while having appropriate electro-conductivity. For example, an electrically conductive paste in which at least either one of carbon particles and metal is dispersed in resin can be used as the resistive layer 90.

As shown in Fig. 5(a), the resistive layer 90 may be provided across the junction (contact surface 10b) of the first electric conductor 10A and the junction (contact surface 20a) of the second electric conductor 20A. Such a configuration can be formed, for example, in such a manner that, after an electrically conductive paste is applied to each of the contact surface 10b of the first electric conductor 10A and the contact surface 20a of the second electric conductor 20A, the contact surfaces are pasted to each other. Moreover, as shown in Fig. 5(b), the resistive layer 90 may be provided from the junction (contact surface 10b) of the first electric conductor 10A to the inside of the first electric conductor 10A. Such a configuration can be formed, for example, in such a manner that, after the electrically conductive paste is applied to the contact surface 10b of the first electric conductor 10A, the contact surfaces are pasted to each other. Moreover, as shown in Fig. 5(c), the resistive layer 90 may be provided from the junction (contact surface 20a) of the second electric conductor 20A to the inside of the second electric conductor 20A. Such a configuration can be formed, for example, in such a manner that, after the electrically conductive paste is applied to the contact surface 20a of the second electric conductor 20A, the contact surfaces are pasted to each other.

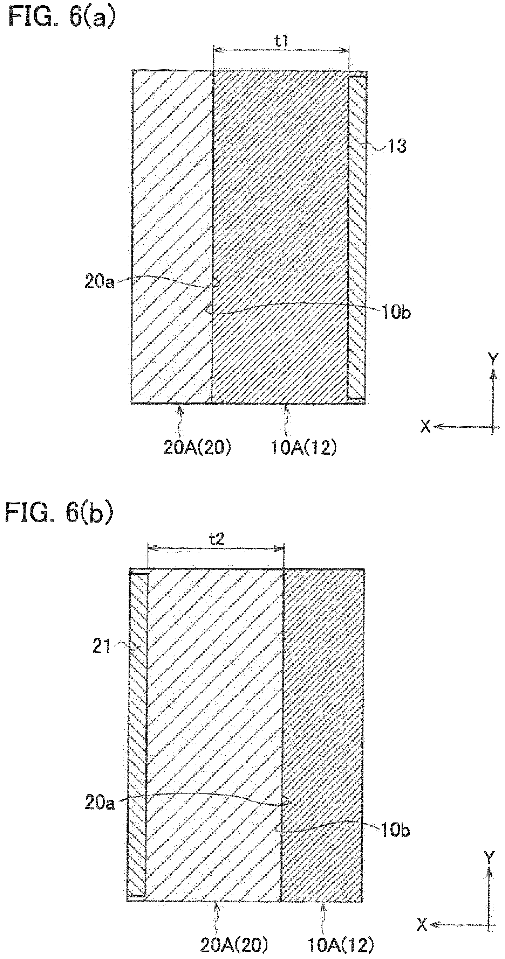

Moreover, in order that the electronic connection section 15 of the first electric conductor 10A may have higher electrical resistivity than the junction of the first electric conductor 10A, it is also preferable to increase a thickness t1 in the lamination direction (X-axis direction) of the electronic connection section 15 of the first electric conductor 10A as shown in Fig. 6(a). Specifically, it is preferable to increase the thickness t1 of the electronic connection section 15. The thickness t1 is a distance from the junction of the first electric conductor 10A to the catalyst 13. The increase of the thickness t1 of the electronic connection section 15 lengthens an electronic conduction path from the junction of the first electric conductor 10A to the catalyst 13, thus making it possible to increase the electrical resistance.

In order that the electronic connection section 25 of the second electric conductor 20A may have higher electrical resistivity than the junction of the second electric conductor 20A, it is also preferable to increase a thickness t2 in the lamination direction (X-axis direction) of the electronic connection section 25 of the second electric conductor 20A as shown in Fig. 6(b). Specifically, it is preferable to increase the thickness t2 of the electronic connection section 25. The thickness t2 is a distance to the junction of the second electric conductor 20A from the portion of the second electric conductor 20A, where electrons are received from the microorganisms. The increase of the thickness t2 of the electronic connection section 25 lengthens an electronic conduction path to the junction of the second electric conductor 20A from the portion of the second electric conductor 20A, where electrons are received from the microorganisms. Accordingly, it becomes possible to increase the electrical resistance.

Next, a description will be given of a function of the purification device 100 according to this embodiment. When the purification device 100 is operated, the wastewater 80 containing at least either one of the organic matter and the nitrogen-containing compound is supplied to the negative electrode 20 that is the second electric conductor, and air or oxygen is supplied to the positive electrode 10 that is the first electric conductor. At this time, air and oxygen are continuously supplied to the gas phase 40.

Then, in the positive electrode 10 shown in Fig. 1 and Fig. 2, air permeates the water-repellent layer 11 and is diffused by the gas diffusion layer 12. In the negative electrode 20, hydrogen ions and electrons are generated from at least either one of the organic matter and the nitrogen-containing compound in the wastewater 80 by the catalytic action of the microorganisms. The generated hydrogen ions pass through an inner space of the negative electrode 20, the inner space having the wastewater 80 be present therein, and move to the positive electrode 10. Moreover, the generated electrons pass through the electrically conductive sheet of the negative electrode 20, and move to the gas diffusion layer 12 of the positive electrode 10. Then, the hydrogen ions and the electrons are combined with oxygen by an action of the catalyst 13 supported on the gas diffusion layer 12, and are consumed as water.

For example, when the wastewater 80 contains glucose as the organic matter, the above-mentioned local cell reaction (half-cell reaction) is represented by the following formula.
- Negative electrode 20: C₆H₁₂O₆ + 6H₂O → 6CO₂ + 24H⁺ + 24e⁻
- Positive electrode 10: 6O₂ + 24H⁺ + 24e⁻ → 12H₂O

Moreover, when the wastewater 80 contains ammonia as the nitrogen-containing compound, the local cell reaction is represented by the following formula.
- Negative electrode 20: 4NH3 → 2N₂ + 12H⁺ + 12e⁻
- Positive electrode 10: 3O₂ + 12H⁺ + 12e⁻ → 6H₂O

As described above, the catalytic action of the microorganisms in the negative electrode 20 makes it possible to degrade the organic matter and the nitrogen-containing compound in the wastewater 80, and to purify the wastewater 80. Note that hydroxide ions are sometimes generated by the reduction reaction of oxygen in the positive electrode 10. Therefore, in some cases, the generated hydroxide ions move through an inner space of the positive electrode 10, and are combined with the hydrogen ions generated in the negative electrode 20, whereby water is generated.

As mentioned above, the purification unit 1 according to this embodiment includes: the first electric conductor 10A including the catalyst 13; and the second electric conductor 20A brought into contact with and electrically connected to the first electric conductor 10A. Then, the first electric conductor 10A includes: the junction composed of the contact surface 10b with the second electric conductor 20A; and the electronic connection section 15 that conducts electrons from the junction to the catalyst 13. The second electric conductor 20A includes: the junction composed of the contact surface 20a with the first electric conductor 10A; and the electronic connection section 25 that conducts electrons to the junction, the electrons having moved from the microorganisms 21 to the second electric conductor 20A. The electronic connection section 15 of the first electric conductor 10A has higher electrical resistivity than the junction of the first electric conductor 10A, and/or the electronic connection section 25 of the second electric conductor 20A has higher electrical resistivity than the junction of the second electric conductor 20A. Then, at least a part of the first electric conductor 10A contacts the gas phase 40 including oxygen, and at least a part of the second electric conductor 20A contacts the treatment target.

The purification device 100 includes: the above-mentioned purification unit 1; and the treatment tank 70 for holding therein the purification unit 1 and the wastewater 80 to be purified by the purification unit 1. Then, the purification unit 1 is installed so that at least a part of the first electric conductor 10A contacts the gas phase 40, and that at least a part of the second electric conductor 20A contacts the wastewater 80.

Through an electron transfer reaction, the purification device 100 of this embodiment can oxidatively degrade the component (organic matter or nitrogen-containing compound) contained in the wastewater 80 in an efficient manner. Specifically, the organic matter and/or the nitrogen-containing compound, which is contained in the wastewater 80, is degraded and removed by the metabolism of the anaerobic microorganisms, that is, by growth of the microorganisms. Then, since this oxidative degradation treatment is performed under an anaerobic condition, conversion efficiency of the organic matter into new microbial cells can be kept lower than in the case where the oxidative degradation treatment is performed under an aerobic condition. Therefore, the growth of the microorganisms, that is, the amount of generated sludge can be reduced more than in the case of using the activated sludge process. Moreover, while smelling methane gas is generated in usual anaerobic treatment, the generation of methane gas can be suppressed in the oxidative degradation treatment in this embodiment since a metabolite is carbon dioxide gas for example.

Moreover, in the purification unit 1, the electronic connection section 15 of the first electric conductor 10A has higher electrical resistivity than the junction of the first electric conductor 10A, and/or the electronic connection section 25 of the second electric conductor 20A has higher electrical resistivity than the junction of the second electric conductor 20A. In this way, the potential difference between the support region for the catalyst 13 in the first electric conductor 10A and the support region for the microorganisms 21 in the second electric conductor 20A is ensured, thus making it easy to transfer electrons from the second electric conductor 20A to the first electric conductor 10A. As a result, the metabolism of the microorganisms, which follows the electronic conduction, is promoted, and accordingly, it becomes possible to increase the degradation efficiency of the organic matter and the nitrogen-containing compound in the treatment target.

In the purification unit 1, it is preferable that the first electric conductor 10A include the oxygen reduction catalyst. In this way, in the first electric conductor 10A, the oxygen reduction reaction between the oxygen in the gas phase 40 and the hydrogen ions and the electrons, which are generated in the second electric conductor 20A, is promoted, and accordingly, it becomes possible to purify the treatment target more efficiently.

Moreover, it is preferable that the anaerobic microorganisms be supported on at least either one of the surface and inside of the second electric conductor 20A. The anaerobic microorganisms are used, whereby the growth of the microorganisms, that is, the amount of generated sludge can be reduced, and further, it also becomes possible to suppress the generation of the methane gas.

In the purification unit 1, when the microorganisms contact the positive electrode 10 that is the first electric conductor, possibly, a condensate caused by a secretory component of the microorganisms may be fixedly attached to the positive electrode 10, oxygen may be consumed excessively by the microorganisms, and a local pH gradient may be formed, resulting in a decrease of a reaction amount following the electron transfer. Therefore, it is preferable that such adhesion of the microorganisms to the positive electrode 10 be inhibited as much as possible.

A method for inhibiting the adhesion of the microorganisms to the positive electrode 10 includes: a method using the resistive layer 90 having pores with a pore size that does not allow physical passage of the microorganisms; or a method using chemical/biological actions of the resistive layer 90. The method using the chemical/biological actions includes a method of fixing a disinfectant for sterilizing the microorganisms to the resistive layer 90. As the disinfectant, for example, tetracycline and a compound that emits silver or copper ions having disinfectant properties can be used. Moreover, the method using the chemical/biological actions includes a method of providing the resistive layer 90 itself with local pH going out of a range where the microorganisms are capable of growing.

In the case of applying the method for inhibiting the adhesion of the microorganisms to the resistive layer 90, it is preferable to prevent the microorganisms from entering the inside of the positive electrode 10 from the upper surface 10c, lower surface 10d, right side surface 10e or left side surface 10f of the positive electrode 10 without passing through the resistive layer 90. That is, even if the method for inhibiting the adhesion of the microorganisms to the resistive layer 90 is applied, when the microorganisms enter from the upper surface 10c, lower surface 10d, right side surface 10e or left side surface 10f of the positive electrode 10, the microorganisms adhere to the inside of the positive electrode 10. Therefore, it is preferable that the upper surface 10c, lower surface 10d, right side surface 10e and left side surface 10f of the positive electrode 10 be sealed by a sealing material so as to prevent the microorganisms from entering the inside of the positive electrode 10. It is preferable that the sealing material be composed of a material that at least prevents the passage of the microorganisms, and for example, a resin can be used, which includes at least one selected from the group consisting of epoxy resin, polymethyl methacrylate, methacrylic acid-styrene copolymer, styrene-butadiene rubber, butyl rubber, nitrile rubber, chloroprene rubber and silicone.

Moreover, the method for inhibiting the adhesion of the microorganisms to the positive electrode 10 includes a method of fixing the disinfectant for sterilizing the microorganisms to the positive electrode 10. Moreover, the method using the chemical/biological actions also includes a method of providing the positive electrode 10 itself with local pH going out of the range where the microorganisms are capable of growing.

In the purification device 100, the treatment tank 70 holds the wastewater 80 in the inside thereof, and may have a configuration through which the wastewater 80 is circulated. For example, as shown in Fig. 1 and Fig. 2, the treatment tank 70 may be provided with a wastewater supply port 71 for supplying the wastewater 80 to the treatment tank 70 and a wastewater discharge port 72 for discharging the treated wastewater 80 from the treatment tank 70. Then, it is preferable that the wastewater 80 be continuously supplied through the wastewater supply port 71 and the wastewater discharge port 72.

For example, the negative electrode 20 that is the second electric conductor according to this embodiment may be modified by electron transfer mediator molecules. Alternatively, the wastewater 80 in the treatment tank 70 may contain the electron transfer mediator molecules. In this way, the electron transfer from the anaerobic microorganisms to the negative electrode 20 is promoted, and more efficient liquid treatment can be achieved.

Specifically, in the metabolic mechanism by the anaerobic microorganisms, electrons are transferred within cells or with final electron acceptors. When such mediator molecules are introduced into the wastewater 80, the mediator molecules act as the final electron acceptors for metabolism, and deliver the received electrons to the negative electrode 20. As a result, it becomes possible to enhance an oxidative degradation rate of the organic matter and the like in the negative electrode 20. Note that a similar effect is obtained even if the mediator molecules are supported on the surface 20b of the negative electrode 20. The electron transfer mediator molecules as described above are not particularly limited. As the electron transfer mediator molecules as described above, for example, there can be used at least one selected from the group consisting of neutral red, anthraquinone-2,6-disulfonic acid (AQDS), thionine, potassium ferricyanide, and methyl viologen.

### [Second embodiment]

Next, a detailed description will be given of a purification unit and a purification device according to a second embodiment with reference to the drawings. Note that the same reference numerals will be assigned to the same constituents as those of the first embodiment, and a duplicate description will be omitted.

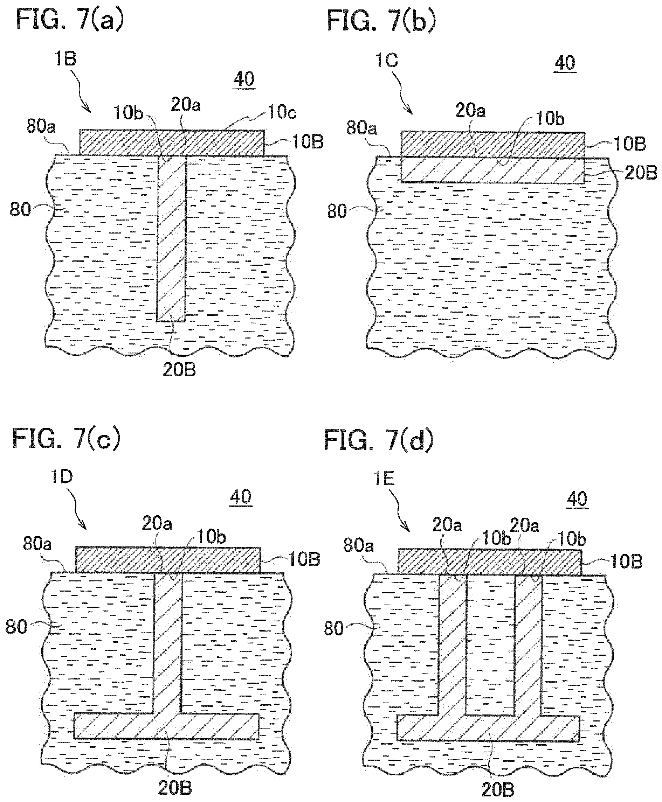

As shown in Fig. 7, the purification unit according to this embodiment includes: a first electric conductor 10B including the catalyst 13; and a second electric conductor 20B brought into contact with and electrically connected to the first electric conductor 10B. Then, the first electric conductor 10B includes: a junction composed of the contact surface 10b with the second electric conductor 20B; and an electronic connection section that conducts electrons from the junction to the catalyst 13. Moreover, the second electric conductor 20B includes: a junction composed of the contact surface 20a with the first electric conductor 10B; and an electronic connection section that conducts electrons to the junction, the electrons having moved from the microorganisms to the second electric conductor 20B. Then, the electronic connection section 15 of the first electric conductor 10B has higher electrical resistivity than the junction of the first electric conductor 10B, and/or the electronic connection section 25 of the second electric conductor 20B has higher electrical resistivity than the junction of the second electric conductor 20B.

In the purification unit shown in Fig. 7, the first electric conductor 10B is exposed from a water surface 80a of the wastewater 80, and is brought into direct contact with air that is the gas phase including oxygen. Therefore, this purification unit does not have to include the cassette substrate 50 and the plate member 60 for forming the gas phase 40, which are used in the first embodiment. Moreover, the first electric conductor 10B does not have to include the water-repellent layer 11 in the positive electrode 10 of the first embodiment. Therefore, the first electric conductor 10B can adopt the same configuration as that of the gas diffusion layer 12 of the positive electrode 10 in the first embodiment, and the second electric conductor 20B can adopt the same configuration as that of the negative electrode 20 in the first embodiment.

In the purification device of this embodiment, the purification unit is installed so that at least a part of the first electric conductor 10B contacts the gas phase 40 including oxygen, and that at least a part of the second electric conductor 20B contacts the wastewater 80 that is the treatment target. In this case, the second electric conductor 20B is in contact with the wastewater 80, and accordingly, the wastewater 80 is present therein. Therefore, the second electric conductor 20B enables the hydrogen ions to move by the wastewater 80 therein. Moreover, the first electric conductor 10B is also partially in contact with the wastewater 80, and the wastewater 80 is present therein. Furthermore, when the first electric conductor 10B is a porous body for example, the wastewater 80 can be raised by a capillary phenomenon, and can be held inside the first electric conductor 10B. Therefore, the first electric conductor 10B also enables the hydrogen ions to move by the wastewater 80 therein.

The purification device of this embodiment can also function in a similar way to the first embodiment. Specifically, when the purification device is operated, the wastewater 80 containing at least either one of the organic matter and the nitrogen-containing compound is supplied to the second electric conductor 20B, and air or oxygen is supplied to the first electric conductor 10B. At this time, the first electric conductor 10B is exposed to air, and accordingly, is supplied with air continuously.

Then, in the second electric conductor 20B, the hydrogen ions and the electrons are generated from at least either one of the organic matter and the nitrogen-containing compound in the wastewater 80 by the catalytic action of the microorganisms. The generated hydrogen ions pass through an inner space of the second electric conductor 20B, and move to the first electric conductor 10B. Moreover, the generated electrons move to the first electric conductor 10B through the second electric conductor 20B. Then, the hydrogen ions and the electrons are combined with oxygen by an action of the catalyst supported on the first electric conductor 10B, and are consumed as water.

In a similar way to the first embodiment, through the electron transfer reaction, the purification device of this embodiment can also oxidatively degrade the organic matter and the nitrogen-containing compound, which are contained in the wastewater 80 in an efficient manner. Then, since this oxidative degradation treatment is performed under an anaerobic condition, the growth of the microorganisms, that is, the amount of generated sludge can be reduced more than in the case of using the activated sludge process. Moreover, the generation of methane gas can be suppressed in the oxidative degradation treatment in this embodiment since a metabolite is carbon dioxide gas for example.

Moreover, in the purification unit for use in this embodiment, the first electric conductor 10B is exposed to air, and accordingly, the water-repellent layer 11, the cassette substrate 50 and the plate member 60 for forming the gas phase 40 become unnecessary. Therefore, it becomes possible to simplify the structure of the purification unit.

The purification unit according to this embodiment is not particularly limited as long as the purification unit is configured so that at least a part of the first electric conductor 10B can be exposed from the water surface 80a of the wastewater 80, and that the second electric conductor 20B can be immersed in the wastewater 80. For example, the purification unit can be configured as shown in Figs. 7(a) to 7(d).

In a purification unit 1B in Fig. 7(a), the first electric conductor 10B is disposed substantially horizontally with respect to the water surface 80a, and the second electric conductor 20B is disposed substantially perpendicularly to the first electric conductor 10B. Note that the second electric conductor 20B is not limited to be single, and a plurality of the second electric conductors 20B may be connected to the first electric conductor 10B that is single.

In a purification unit 1C in Fig. 7(b), the first electric conductor 10B is disposed substantially horizontally to the water surface 80a, and the second electric conductor 20B is disposed substantially parallel to the first electric conductor 10B. In a purification unit 1D in Fig. 7(c), the first electric conductor 10B is disposed substantially horizontally to the water surface 80a. Then, the second electric conductor 20B has a substantially T-shaped cross section. In a purification unit 1E in Fig. 7(d), the first electric conductor 10B is disposed substantially horizontally to the water surface 80a. Then, the second electric conductor 20B has a substantially Π-shaped cross section.

When the oxygen reduction catalyst is supported on the upper surface 10c of the first electric conductor 10B as shown in Fig. 7(a), it is preferable that the wastewater 80 be held up to the upper surface 10c of the first electric conductor 10B in order to ensure conductivity of the hydrogen ions to the oxygen reduction catalyst. However, by disposing an ion conductive material inside the first electric conductor 10B, it becomes possible to conduct the hydrogen ions up to the oxygen reduction catalyst even if the wastewater 80 is not held. As the ion conductive material, for example, there can be used Nafion (registered trademark) containing a perfluorosulfonic acid group, Flemion (registered trademark) composed of perfluoro-type vinyl ether containing a carboxylic acid group.

### [Third embodiment]

Next, a detailed description will be given of a purification unit and a purification device according to a third embodiment with reference to the drawings. Note that the same reference numerals will be assigned to the same constituents as those of the first and second embodiments, and a duplicate description will be omitted.

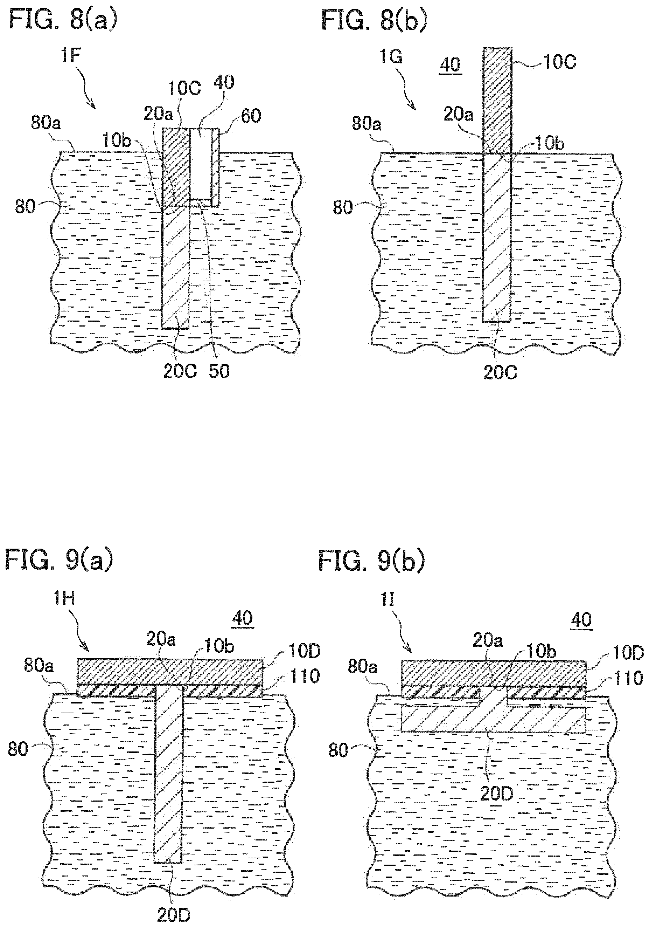

The purification unit according to this embodiment also has a configuration similar to that in the second embodiment. As shown in Fig. 8, the purification unit includes: a first electric conductor 10C including the catalyst 13; and a second electric conductor 20C brought into contact with and electrically connected to the first electric conductor 10C. Then, the first electric conductor 10C includes: a junction composed of the contact surface 10b with the second electric conductor 20C; and an electronic connection section that conducts electrons from the junction to the catalyst 13. Moreover, the second electric conductor 20C includes: a junction composed of a contact surface 20a with the first electric conductor 10C; and an electronic connection section that conducts electrons to the junction, the electrons having moved from the microorganisms to the second electric conductor 20C. Then, the electronic connection section 15 of the first electric conductor 10C has higher electrical resistivity than the junction of the first electric conductor 10C, and/or the electronic connection section 25 of the second electric conductor 20C has higher electrical resistivity than the junction of the second electric conductor 20C. Note that, in the purification unit of this embodiment, the first electric conductor 10C and the second electric conductor 20C are connected to each other in the vertical direction.

Specifically, as shown in Fig. 8(a), in a purification unit IF, the first electric conductor 10C and the second electric conductor 20C are connected to each other in the vertical direction. Then, the second electric conductor 20C and a part of the first electric conductor 10C are immersed in the wastewater 80. Moreover, in order to increase a contact area with the gas phase 40, the cassette substrate 50 and the plate member 60 are provided in the first electric conductor 10C. Therefore, it is preferable that the first electric conductor 10C adopt the same configuration as that of the positive electrode 10 including the water-repellent layer 11 and the gas diffusion layer 12 in the first embodiment. Moreover, the second electric conductor 20C can adopt the same configuration as that of the negative electrode 20 in the first embodiment.

As shown in Fig. 8(b), in a purification unit 1G, the first electric conductor 10C and the second electric conductor 20C are connected to each other in the vertical direction. Then, the first electric conductor 10C is exposed to the gas phase 40, and the second electric conductor 20C is immersed in the wastewater 80. Therefore, the first electric conductor 10C can adopt the same configuration as that of the gas diffusion layer 12 of the positive electrode 10 in the first embodiment, and the second electric conductor 20C can adopt the same configuration as that of the negative electrode 20 in the first embodiment.

Here, when the first electric conductor 10C is a porous body for example, the wastewater 80 can be raised by the capillary phenomenon, and can be held inside the first electric conductor 10C. Therefore, the first electric conductor 10C enables the hydrogen ions to move by the wastewater 80 therein. Note that, as mentioned above, the ion conductive material may be disposed inside the first electric conductor 10C in order to ensure the conductivity of the hydrogen ions.

The purification device of this embodiment can also function in a similar way to the first and second embodiments. Specifically, when the purification device is operated, the wastewater 80 containing at least either one of the organic matter and the nitrogen-containing compound is supplied to the second electric conductor 20C, and air or oxygen is supplied to the first electric conductor 10C. Then, in the second electric conductor 20C, the hydrogen ions and the electrons are generated from at least either one of the organic matter and the nitrogen-containing compound in the wastewater 80 by the catalytic action of the microorganisms. The generated hydrogen ions pass through an inner space of the second electric conductor 20C, and move to the first electric conductor 10C. Moreover, the generated electrons move to the first electric conductor 10C through the second electric conductor 20C. Then, the hydrogen ions and the electrons are combined with oxygen by an action of the catalyst supported on the first electric conductor 10C, and are consumed as water.

In the purification device of this embodiment, the purification units 1F and 1G are disposed in the vertical direction, and accordingly, an installation space of each of the purification units 1F and 1G in the wastewater 80 can be reduced. Therefore, pluralities of the purification units 1F and 1G can be installed in a small space, and it becomes possible to efficiently purify the wastewater 80.

### [Fourth embodiment]

Next, a detailed description will be given of a purification unit and a purification device according to a fourth embodiment with reference to the drawings. Note that the same reference numerals will be assigned to the same constituents as those of the first to third embodiments, and a duplicate description will be omitted.

The purification unit according to this embodiment also has a configuration similar to that in the second embodiment. As shown in Fig. 9, the purification unit includes: a first electric conductor 10D including the catalyst 13; and a second electric conductor 20D brought into contact with and electrically connected to the first electric conductor 10D. Then, the first electric conductor 10D includes: a junction composed of the contact surface 10b with the second electric conductor 20D; and an electronic connection section that conducts electrons from the junction to the catalyst 13. Moreover, the second electric conductor 20D includes: a junction composed of the contact surface 20a with the first electric conductor 10D; and an electronic connection section that conducts electrons to the junction, the electrons having moved from the microorganisms to the second electric conductor 20D. Then, the electronic connection section 15 of the first electric conductor 10D has higher electrical resistivity than the junction of the first electric conductor 10D, and/or the electronic connection section 25 of the second electric conductor 20D has higher electrical resistivity than the junction of the second electric conductor 20D.

In a purification unit 1H in Fig. 9(a), the first electric conductor 10D is disposed substantially horizontally with respect to the water surface 80a, and the second electric conductor 20D is disposed substantially perpendicularly to the first electric conductor 10D. Moreover, in a purification unit 1I in Fig. 9(b), the first electric conductor 10D is disposed substantially horizontally to the water surface 80a, and the second electric conductor 20D has a substantially T-shaped cross section.

In the purification unit shown in Fig. 9, the first electric conductor 10D is exposed from the water surface 80a of the wastewater 80, and is brought into direct contact with air that is the gas phase including oxygen. Then, the second electric conductor 20D is immersed in the wastewater 80. Therefore, the first electric conductor 10D can adopt the same configuration as that of the gas diffusion layer 12 of the positive electrode 10 in the first embodiment, and the second electric conductor 20D can adopt the same configuration as that of the negative electrode 20 in the first embodiment.

Here, when the first electric conductor 10D is a porous body for example, the wastewater 80 can be raised by the capillary phenomenon, and can be held inside the first electric conductor 10D. Therefore, the first electric conductor 10D enables the hydrogen ions to move by the wastewater 80 therein. Note that, as mentioned above, the ion conductive material may be disposed inside the first electric conductor 10D in order to ensure the conductivity of the hydrogen ions.

In the purification unit of this embodiment, a lid member 110 is provided between the first electric conductor 10D and the water surface 80a of the wastewater 80. Then, it is preferable that the lid member 110 have low oxygen permeability. The lid member 110 having low oxygen permeability is provided, whereby the contact between the wastewater 80 and the gas phase 40 is suppressed, and an amount of the oxygen dissolved in the wastewater 80 can be reduced. As a result, an atmosphere around the second electric conductor 20D disposed inside the wastewater 80 can be made anaerobic, and accordingly, it becomes possible to promote the metabolism of the anaerobic microorganisms. Moreover, in the purification unit 1I in Fig. 9(b), the lid member 110 is provided, whereby the vicinity of the water surface 80a can be kept anaerobic. Accordingly, it becomes possible to dispose the second electric conductor 20D close to the first electric conductor 10D.

It is preferable that the lid member 110 as described above be made of a resin material having low oxygen permeability. Moreover, in order to expose the first electric conductor 10D from the water surface 80a of the wastewater 80, it is preferable to reduce a specific gravity of the lid member 110 than that of water, and to generate a buoyancy in the lid member 110.

### [Fifth embodiment]

Next, a detailed description will be given of a purification unit and a purification device according to a fifth embodiment with reference to the drawings. Note that the same reference numerals will be assigned to the same constituents as those of the first to fourth embodiments, and a duplicate description will be omitted.

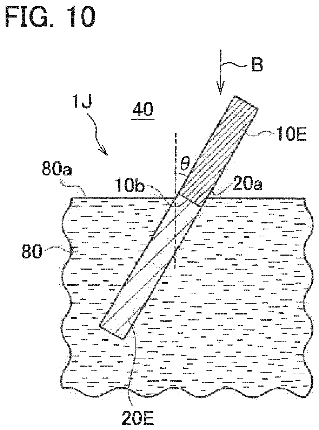

The purification unit according to this embodiment also has a configuration similar to that in the third embodiment. As shown in Fig. 10, the purification unit includes: a first electric conductor 10E including the catalyst 13; and a second electric conductor 20E brought into contact with and electrically connected to the first electric conductor 10E. Then, the first electric conductor 10E includes: a junction composed of the contact surface 10b with the second electric conductor 20E; and an electronic connection section that conducts electrons from the junction to the catalyst 13. Moreover, the second electric conductor 20E includes: a junction composed of the contact surface 20a with the first electric conductor 10E; and an electronic connection section that conducts electrons to the junction, the electrons having moved from the microorganisms to the second electric conductor 20E. Then, the electronic connection section 15 of the first electric conductor 10E has higher electrical resistivity than the junction of the first electric conductor 10E, and/or the electronic connection section 25 of the second electric conductor 20E has higher electrical resistivity than the junction of the second electric conductor 20E.

Then, the first electric conductor 10E is exposed to the gas phase 40, and the second electric conductor 20E is immersed in the wastewater 80. Therefore, since the first electric conductor 10E is not immersed in the wastewater 80, the first electric conductor 10E can adopt the same configuration as that of the gas diffusion layer 12 of the positive electrode 10 in the first embodiment, and the second electric conductor 20E can adopt the same configuration as that of the negative electrode 20 in the first embodiment.

In a similar way to the third embodiment, in the purification unit 1J of this embodiment, the first electric conductor 10E and the second electric conductor 20E are connected to each other in a substantially vertical direction. Note that the purification unit 1J is inclined at an angle θ with respect to the vertical direction, and further, the wastewater 80 flows down on the first electric conductor 10E. That is, the wastewater 80 contacts an upper portion of the first electric conductor 10E along an arrow B shown in Fig. 10, passes through a surface and inside of the first electric conductor 10E, and thereafter, reaches the reserved wastewater 80 in which the second electric conductor 20E is immersed.

As described above, in the purification unit 1J, the wastewater 80 is always present on the surface of the first electric conductor 10E and in the inside thereof. Therefore, even if the first electric conductor 10E itself is not provided with hydrogen ion conductivity, the hydrogen ions are enabled to reach the oxygen reduction catalyst via the wastewater 80.

Note that, as the wastewater 80 flowing down on the first electric conductor 10E, the wastewater 80 in which the second electric conductor 20E is immersed may be circulated. Moreover, wastewater generated from a pollution source may be flown down on the first electric conductor 10E.

### [Sixth embodiment]

Next, a detailed description will be given of a purification unit and a purification device according to a sixth embodiment.

The first to fifth embodiments describe cases of using the wastewater 80 as the treatment target to be purified by the purification units. In each of the purification units, hydrogen ions and oxygen are generated from the organic matter and the like by the microorganisms in the second electric conductor, and the generated hydrogen ions and electrons move to the first electric conductor. Thereafter, the oxygen reduction reaction occurs in the first electric conductor. Therefore, if these sequential reactions occur, then the treatment target is not limited to wastewater, and for example, soil is usable as the treatment target. Moreover, anaerobic microorganisms which are electricity-producing bacteria are present in the soil. For example, electricity-producing bacteria such as Geobacter bacteria are latently present in soil of paddies. Therefore, it becomes possible to purify the soil just by inserting the purification units according to the first to fifth embodiments into the soil.

As mentioned above, it is preferable that the first electric conductor and the second electric conductor have the hydrogen ion conductivity. Therefore, it is preferable to use each of the purification units for soil of wetlands, which enables moisture as a hydrogen ion conductor to enter the insides of the first electric conductor and the second electric conductor. Moreover, it is preferable to provide the hydrogen ion conductivity to the first electric conductor and the second electric conductor by soaking the insides thereof in the ion conductive material or by supplying moisture to the first electric conductor and the second electric conductor.

As described above, the purification device according to this embodiment includes the above-mentioned purification unit. Then, the purification unit is installed so that at least a part of the first electric conductor contacts the gas phase 40, and that at least a part of the second electric conductor contacts the soil to be purified by the purification unit. Use of the purification unit and the purification device, which are as described above, makes it possible to purify the soil by a simple system while inhibiting the generation of the biogas. Moreover, the purification unit does not need to be applied from the outside with electrical power required for operating the purification unit, and the purification unit can be operated just by being inserted into the soil, and accordingly, it becomes possible to purify the soil even at a place to which it is difficult to supply electrical power.

Although this embodiment has been described above, this embodiment is not limited to these, and various modifications are possible within the scope of the spirit of this embodiment. Moreover, the purification device according to this embodiment can be widely applied to treatment for the liquid containing the organic matter and the nitrogen-containing compound, for example, wastewater generated from factories of various industries, and treatment for organic wastewater such as sewage sludge, and further, applied to the purification of the soil. Moreover, the purification device can be used for improving an environment of a water area.

The entire contents of Japanese Patent Application No. 2016-109901 (filed on: June 1, 2016) are incorporated herein by reference.

### INDUSTRIAL APPLICABILITY

In accordance with the present invention, there can be obtained the purification unit capable of inhibiting the generation of the biogas while reducing the amount of generated sludge, and obtained the purification device using the purification unit.

### REFERENCE SIGNS LIST

1, 1A, 1B, 1C, 1D, 1E, 1F, 1G, 1H, 1I, 1J Purification unit
10A, 10B, 10C, 10D, 10E First electric conductor
10b Contact surface
13 Catalyst
15 Electronic connection section
20A, 20B, 20C, 20D, 20E Second electric conductor
20a Contact surface
21 Microorganism
25 Electronic connection section
40 Gas phase
70 Treatment tank
80 Wastewater
100 Purification device

## Claims

1. A purification unit comprising:
a first electric conductor including a catalyst; and
a second electric conductor brought into contact with and electrically connected to the first electric conductor, and
wherein the first electric conductor includes: a junction composed of a contact surface with the second electric conductor; and an electronic connection section that conducts electrons from the junction to the catalyst, and the second electric conductor includes: a junction composed of a contact surface with the first electric conductor; and an electronic connection section that conducts electrons to the junction, the electrons moving from the microorganisms to the second electric conductor,
the electronic connection section of the first electric conductor has higher electrical resistivity than the junction of the first electric conductor, and/or the electronic connection section of the second electric conductor has higher electrical resistivity than the junction of the second electric conductor, and
at least a part of the first electric conductor contacts a gas phase including oxygen, and at least a part of the second electric conductor contacts a treatment target.

2. The purification unit according to claim 1, wherein the first electric conductor includes an oxygen reduction catalyst.

3. A purification device comprising:
the purification unit according to claim 1 or 2; and
a treatment tank which holds, in an inside, the purification unit and wastewater to be purified by the purification unit,
wherein the purification unit is installed so that at least a part of the first electric conductor contacts the gas phase, and that at least a part of the second electric conductor contacts the wastewater.

4. A purification device comprising:
the purification unit according to claims 1 or 2,
wherein the purification unit is installed so that at least a part of the first electric conductor contacts the gas phase, and that at least a part of the second electric conductor contacts soil to be purified by the purification unit.

5. The purification device according to claim 3 or 4, wherein anaerobic microorganisms are supported on at least either one of a surface and inside of the second electric conductor.
